**Europäisches Patentamt**

**European Patent Office**

**Office européen des brevets**

(19)

(11) Veröffentlichungsnummer: **0 143 869**
**B1**

(12) # EUROPÄISCHE PATENTSCHRIFT

(45) Veröffentlichungstag der Patentschrift:
**18.01.89**

(51) Int. Cl.⁴: **B 65 G 49/04**, B 05 C 13/02

(21) Anmeldenummer: **84103352.5**

(22) Anmeldetag: **27.03.84**

(54) **Transport- und Betätigungsarm.**

(30) Priorität: **01.12.83 DE 3343542**

(43) Veröffentlichungstag der Anmeldung:
**12.06.85 Patentblatt 85/24**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 2 708 103**
**FR-A- 2 201 406**

(73) Patentinhaber: **Carl August Heinz Glashüttenwerke GmbH & Co. KG, Kleintettau Hauptstrasse 47, D-8641 Tettau/Ofr. (DE)**

(72) Erfinder: **Söllner, Reinhard, Alte Tettauer Strasse 24 Kleintettau, D-8641 Tettau/Obfr. (DE)**

(74) Vertreter: **Feldkamp, Rainer, Dipl.-Ing. et al, Patent Attorneys Dipl.-Ing. Curt Wallach Dipl.-Ing. Günther Koch, Dr. Tino Haibach Dipl.-Ing. Rainer Feldkamp Kaufinger Strasse 8, D-8000 München 2 (DE)**

**Beschreibung**

Die Erfindung bezieht sich auf einen Transport- und Betätigungsarm für Gegenstände, die einer Behandlung mit Flüssigkeiten ausgesetzt werden sollen, mit einer an einer Aufhängungsvorrichtung gehaltenen Kolben-Zylinderanordnung, an deren von der Aufhängungsvorrichtung abgewandten Ende eine Aufnahmevorrichtung für die zu behandelnden Gegenstände befestigt ist, und mit einer Drehsicherung, die eine Verdrehung der Aufnahmevorrichtung gegenüber der Aufhängungsvorrichtung verhindert.

Zur Mattierung von beispielsweise aus Glas bestehenden Gegenständen ist es erforderlich, diese Gegenstände aufeinanderfolgend in verschiedene Säurebäder und Spülbäder einzutauchen, wobei die Verweildauer in den einzelnen Bädern unterschiedlich sein kann. Dieser Vorgang wurde bisher in vielen Fällen manuell ausgeführt, wobei die zu behandelnden Gegenstände in Transportkörbe eingesetzt und diese Transportkörbe von Hand aufeinanderfolgend in die einzelnen Bäder eingetaucht wurden. Dieser Vorgang ist einerseits zeitraubend und für die die Behandlung durchführenden Personen beispielsweise aufgrund der verwendeten Säuren unangenehm und gegebenenfalls gesundheitsschädlich und andererseits ist eine Kontrolle der Verweildauer in den einzelnen Bädern nicht möglich.

Zur Behandlung von metallischen Bauteilen ist es bereits bekannt (DE-A 2 708 103), eine im wesentlichen kreisförmig ausgebildete, um eine Drehachse drehbare Aufhängungsvorrichtung zu verwenden, an deren Aussenumfang eine Anzahl von Kolben-Zylinderanordnungen gehaltert ist, die bei einer Drehung der Aufhängungsvorrichtung mit einer entsprechenden Anzahl von Behandlungsstationen ausrichtbar sind und an deren unteren Ende Aufnahmevorrichtungen für die zu behandelnden Gegenstände angeordnet sind. Die Kolben-Zylinderanordnungen dienen hierbei nicht nur zum Absenken der zu behandelnden Gegenstände in einzelne, beispielsweise als Bäder ausgebildete Behandlungsstationen, sondern auch zur Bewegung der zu behandelnden Gegenstände in den Behandlungsstationen. Die Steuerung dieser Bewegung der zu behandelnden Gegenstände in den Behandlungsstationen ist jedoch relativ aufwendig, da der Hub der Kolben-Zylinderanordnungen in irgendeiner Weise begrenzt werden muss und weiterhin ist der Strömungsmittelverbrauch für diese Behandlung relativ hoch.

Der Erfindung liegt die Aufgabe zugrunde, einen Transport- und Betätigungsarm der eingangs genannten Art zu schaffen, der eine zuverlässige und genaue Behandlung der Gegenstände bei geringem Verbrauch an Druckströmungsmedium ermöglicht.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die Verwendung von zwei hintereinander in Reihe angeordneten Kolben- und Zylinderanordnungen wird einerseits ein Eintauchen und Herausheben der Gegenstände aus einzelnen Behandlungsstationen, beispielsweise Bädern, mit einer Kolben-Zylinderanordnung, die einen relativ grossen Hub aufweist, und andererseits eine Bewegung der Gegenstände in den einzelnen Bädern mit Hilfe der anderen Kolben-Zylinderanordnung, die einen relativ kleinen Hub aufweist, klar ermöglicht und auf diese Weise wird der Verbrauch an Druckströmungsmedium, beispielsweise Luft, sehr gering gehalten, und es sind keine aufwendigen Begrenzungseinrichtungen erforderlich, die den Hub einer einzigen Kolben-Zylinderanordnung bei der Bewegung innerhalb der Bäder begrenzen müssten.

Die Drehsicherungen, die zur Verhinderung einer Verdrehung der Aufnahmevorrichtung gegenüber der Aufhängungsvorrichtung vorgesehen sind, können gemäss einer bevorzugten Ausgestaltung der Erfindung gleichzeitig zur Druckluftzufuhr an weitere Kolben-Zylinderanordnungen dienen, die an der Aufnahmevorrichtung angeordnet sind.

Derartige weitere Kolben-Zylinderanordnungen können beispielsweise zur Betätigung eines Zwischengliedes dienen, das die Kolbenstange der zweiten Kolben-Zylinderanordnungen mit der Aufnahmevorrichtung für die zu behandelnden Gegenstände verbindet und das Verschwenken der Aufnahmevorrichtung um eine zur Achse der Kolbenstange senkrechte Achse ermöglicht. Auf diese Weise ist es möglich, nach dem Herausheben der Gegenstände aus einem Bad die Position dieser Gegenstände zu ändern, so dass die Behandlungsflüssigkeit leichter abtropfen kann.

Die Gegenstände können vorzugsweise in einem Transportkorb mit einem Griff angeordnet sein, der in die als Haken ausgebildete Aufnahmevorrichtung einhängbar ist, wobei eine Verriegelungsvorrichtung zur Arretierung des Griffes in dem Haken vorgesehen ist. Auf diese Weise ist sichergestellt, dass der Transportkorb selbst bei der Schwenkbewegung mit Hilfe des Zwischengliedes sicher an dem Haken festgehalten wird.

Die Verriegelungsvorrichtung wird vorzugsweise ebenfalls durch eine Kolben-Zylinderanordnung betätigt, und es sind Rückmeldeeinrichtungen für die Position aller Kolben-Zylinderanordnungen vorgesehen.

Es sind zwar bereits Kolben-Zylinderanordnungen bekannt (Fr-A-2 201 406), die einen gemeinsamen Zylinder aufweisen, der durch eine Trennwand unterteilt ist und in dem zwei Kolben mit zugehörigen Kolbenstangen angeordnet sind. Eine der Kolbenstangen ist an einem festen Widerlager befestigt, während die andere Kolbenstange zur Betätigung eines Gegenstandes dient. Diese bekannte Kolben-Zylinderanordnung dient lediglich dazu, den zu betätigenden Gegenstand auf vier diskrete Positionen mit gleichem gegenseitigem Abstand einzustellen, nicht jedoch zur Anpassung an die jeweils erforderlichen Betätigungshübe bei getrennten Arbeitsvorgängen. Diese bekannte Kolben-Zylinderanordnung dient damit einem vollständig anderen Zweck und hat auch eine andere Wirkung.

Ausführungsbeispiele der Erfindung werden im folgenden anhand der Zeichnung noch näher erläutert.

In der Zeichnung zeigen:

Fig. 1 eine teilweise geschnittene Ansicht einer Ausführungsform des Transport- und Betätigungsarms,

Figur 2 eine Teilansicht, die die Aufnahmevorrichtung bei einer Schwenkbewegung des Zwischengliedes zeigt,

Figur 3 eine Seitenansicht des unteren Teils des Transport- und Betätigungsarms, wobei weitere Einzelheiten der Aufnahmevorrichtung zu erkennen sind.

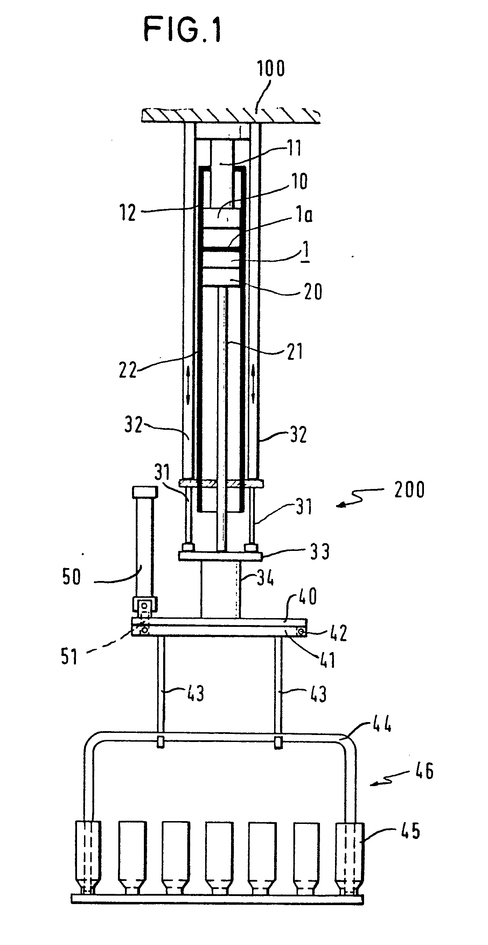

Die in Fig. 1 dargestellte Ausführungsform des Transport- und Betätigungsarms ist insgesamt mit 200 bezeichnet und ist an einer Aufhängungsvorrichtung 100 befestigt, die entweder stationär oder mit Hilfe eines Transportsystems beweglich ist. Der Transport- und Betätigungsarm 200 umfasst zwei hintereinander in Reihe angeordnete Kolben-Zylinderanordnungen 10 bis 12 bzw. 20 bis 22, wobei die Zylinder 12, 22 der beiden Kolben-Zylinderanordnungen zu einem einzigen Zylinder 1 vereinigt sind, der durch eine Trennwand 1a getrennt ist. Die erste Kolben-Zylinderanordnung weist einen Kolben 10 auf, der in dem Zylinder 12 beweglich ist und mit einer Kolbenstange 11 verbunden ist, die an der Aufhängungsvorrichtung 100 befestigt ist. Die zweite Kolben-Zylinderanordnung weist einen Kolben 20 auf, der in dem Zylinder 22 beweglich ist und mit einer Kolbenstange 21 verbunden ist, die über ein Verbindungsstück 34 mit einem noch näher zu erläuternden Zwischenglied 40 bis 42 verbunden ist. Am Aussenumfang des gemeinsamen Zylinders 1 sind mehrere Teleskop-Verdrehsicherungen 31, 32 angeordnet, die ebenfalls an der Aufhängungsvorrichtung 100 befestigt sind. Diese Verdrehsicherungen 31, 32 sind an dem Verbindungsstück 34 über eine gemeinsame Platte 33 befestigt und können gleichzeitig zur Zuführung eines Druckströmungsmediums an weitere, an der Aufnahmevorrichtung 43 angeordnete Kolben-Zylinderanordnungen dienen. Diese Aufnahmevorrichtung 43 besteht bei der dargestellten Ausführungsform aus einem Haken, in den ein Griff 44 eines Transportkorbes 46 für die zu behandelnden Gegenstände 45 einhängbar ist. Diese Aufnahmevorrichtung 43 ist an dem Verbindungsstück 34 über ein Zwischenglied 40 bis 42 befestigt, das aus zwei Teilen 40, 41 besteht, die um eine Achse 42 gegeneinander verschwenkbar sind. Diese Verschwenkbewegung wird durch eine Kolben-Zylinderanordnung 50, 51 gesteuert, deren Zylinder 50 an dem einen Teil 40 des Zwischengliedes befestigt ist, während ihre Kolbenstange an dem zweiten Teil 41 befestigt ist.

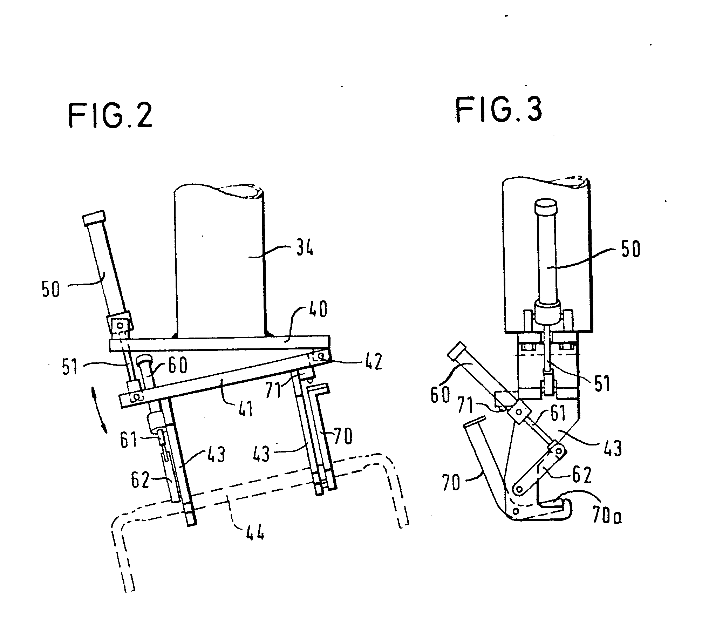

Fig. 2 zeigt dieses Zwischenglied in einer gegenüber der Fig. 1 verschwenkten Stellung, wobei diese Verschwenkbewegung vorzugsweise dazu dienen kann, nach dem Herausheben an den Gegenständen verbleibende Behandlungsflüssigkeiten abtropfen zu lassen.

Durch die Verwendung von zwei hintereinander in Reihe angeordneten Kolben-Zylinderanordnungen ist es bei minimalem Strömungsmittelverbrauch möglich, die Aufnahmevorrichtung 43 und damit die Gegenstände über einen grossen Hub in einzelne Bäder einzutauchen und dann mit Hilfe der ersten Kolben-Zylinderanordnung 10 bis 12 einer Auf- und Abbewegung mit kleinerem Hub zu unterwerfen, um die Behandlungswirkung zu verbessern.

Wie dies insbesondere aus Fig. 3 zu erkennen ist, ist eine Verriegelungsvorrichtung 60 bis 62 zur Verriegelung des Griffes 44 in dem Haken 43 vorgesehen. Diese Verriegelungsvorrichtung besteht aus einem Zylinder 60 mit einem Kolben, dessen Kolbenstange 61 schwenkbar mit einem Verriegelungsglied 62 verbunden ist, das auf die Oberseite des Griffes 44 gedrückt werden kann, um diesen in dem Haken 43 festzuhalten.

Die Tatsache, ob ein Haken 43 einen Transportkorb trägt, oder nicht, wird mit Hilfe einer Rückmeldeeinrichtung 70, 71 festgestellt, die durch einen Winkelhebel 70 gebildet ist, der mit einem Wandler 71 zusammenwirkt. Dieser Winkelhebel ist schwenkbar an dem Haken 43 befestigt und springt im Ruhezustand über die Auflagefläche des Hakens 43 vor, so dass der vorspringende Teil 70a von dem Griff eines Transportkorbes niedergedrückt werden kann, was dazu führt, dass der andere Teil des Winkelhebels gegenüber dem Wandler 71 angeordnet wird. Auf diese Art und Weise kann eine Betätigung eines Transport- und Betätigungsarms, der keinen Transportkorb trägt, vermieden werden, was insbesondere dann wesentlich ist, wenn eine grosse Vielzahl derartiger Transport- und Betätigungsarme in einer Anlage angeordnet ist und diese Transport- und Betätigungsarme nacheinander an den einzelnen Bädern vorbeilaufen.

Weiterhin sind vorzugsweise zusätzliche Rückmeldeeinrichtungen für die Position der einzelnen Kolben-Zylinderanordnungen vorgesehen, um eine vollautomatische Steuerung des Transport- und Betätigungsarms zu ermöglichen.

## Patentansprüche

1. Transport- und Betätgungsarm für Gegenstände, die einer Behandlung mit Flüssigkeiten ausgesetzt werden sollen, mit einer an einer Aufhängungsvorrichtung (100) gehaltenen Kolben-Zylinderanordnung (10–12, 20–22), an deren von der Aufhängungsvorrichtung (100) abgewandten Ende einen Aufnahmevorrichtung (43) für die zu behandelnden Gegenstände (45) befestigt ist, und mit einer Drehsicherung (31–33), die eine Verdrehung der Aufnahmevorrichtung (43) gegenüber der Aufhängungsvorrichtung (100) verhindert, dadurch gekennzeichnet, dass die Kolben-Zylinderanordnung zwei hintereinander in Reihe angeordnete Kolben-Zylinderanordnungen (10–12, 20–22) aufweist, von denen die erste (10–12) einen relativ kleinen maximalen Hub aufweist, um die zu behandelnden Gegenstände (45) in der Flüssigkeit zu bewegen, während die zweite (20–22) einen relativ grossen maximalen Hub zum Eintauchen und Herausheben der Gegenstände (45) in die und aus den Flüssigkeiten aufweist, dass die Zylinder (12, 22) der beiden Kolben-Zylinderanordnungen (10–12, 20–22) in Form eines einstückigen Zylinders (1) ausgebildet sind, der durch eine Trennwand (1a) unterteilt ist, und dass die Kolbenstange (11) der ersten Kolben-Zylinderanordnung (10–12) an der Aufhängungsvorrichtung (100) und die Kolbenstange (21) der zweiten Kolben-Zylinderanordnung (20–22) an der Aufnahmevorrichtung (43) für die Gegenstände (45) befestigt ist.

2. Transport- und Betätigungsarm nach Anspruch 1, dadurch gekennzeichnet, dass die Drehsicherung (31, 32, 33) gleichzeitig die Luftzuführung für an der Aufnahmevorrichtung (43) angeordnete Betätigungseinrichtungen (50, 51, 60, 61) bildet.

3. Transport- und Betätigungsarm nach Anspruch 1 oder 2, dadurch gekennzeichnet, dass die Kolbenstange (21) der zweiten Kolben-Zylinderanordnung (20 bis 22) über ein Zwischenglied (40 bis 42) mit der Aufnahmevorrichtung (43) verbunden ist, dass das Zwischenglied (40 bis 42) eine Schwenkbewegung der Aufnahmevorrichtung (43) um eine zur Achse der Kolbenstange (21) senkrechte Achse (42) ermöglicht und dass eine Betätigungseinrichtung in Form einer Kolben-Zylinderanordnung (50, 51) zum Verschwenken eines Teils (41) des Zwischengliedes (40 bis 42) um die Achse (42) vorgesehen ist.

4. Transport- und Betätigungsarm nach einem der vorhergehenden Ansprüche, dadurch gekennzeichnet, dass die Gegenstände (45) in einem Transportkorb (46) mit einem Griff (44) angeordnet sind, der in die als Haken (43) ausgebildete Aufnahmevorrichtung einhängbar ist und dass eine Verriegelungsvorrichtung (60 bis 62) zur Arretierung des Griffes (44) in dem Haken (43) vorgesehen ist.

5. Transport- und Betätigungsarm nach Anspruch 4, dadurch gekennzeichnet, dass die Verriegelungseinrichtung (60 bis 62) eine Betätigungseinrichtung in Form einer Kolben-Zylinderanordnung (60, 61) aufweist, die einen Verriegelungsbügel (62) verschwenkt, der an dem Haken (43) befestigt ist.

6. Transport- und Betätigungsarm nach einem der vorhergehenden Ansprüche, dadurch gekennzeichnet, dass eine Rückmeldeeinrichtung (70, 71) für den Beladezustand der Aufnahmevorrichtung (43) vorgesehen ist.

7. Transport- und Betätigungsarm nach einem der vorhergehenden Ansprüche, dadurch gekennzeichnet, dass Rückmeldeeinrichtungen für die Position der Kolben-Zylinderanordnungen (10 bis 12, 20 bis 22), des Zwischengliedes (40 bis 42) und der Verriegelungsvorrichtung (60 bis 62) vorgesehen sind.

**Claims**

1. Transport and movement arm for articles that are to be subjected to treatment with liquids, said arm possessing a piston/cylinder arrangement (10–12, 20–22) which is secured to a suspension fixture (100), and a holding device (43) for the articles (45) to be treated being fastened to that end of the piston/cylinder arrangement (10–12, 20–22) which faces was away from the suspension fixture (100), and further possessing an antirotation means (31–33) that prevents the holding device (43) from twisting relative to the suspension fixture (100), characterized in that the piston/cylinder arrangement comprises two piston/cylinder assemblies (10–12, 20–22) which are arranged in line, one behind the other, the first piston/cylinder assembly (10–12) having a relatively small maximum stroke, so as to move the articles (45) within the liquid – these being the articles that are to be treated – whereas the second piston/cylinder assembly (20–22) has a relatively large maximum stroke, for dipping the articles (45) into the liquids, and for lifting them therefrom, in that the cylinders (12, 22) of the two piston/cylinder assemblies (10–12, 20–22) are designed in the form of a one-piece cylinder (1) which is subdivided by a partition wall (1a), and in that the piston rod (11) of the first piston/cylinder assembly (10–12) is fastened to the suspension fixture (100) and the piston rod (21) of the second piston/cylinder assembly (20–22) is fastened to the holding device (43) for the articles (45).

2. Transport and movement arm according to Claim 1, characterized in that the antirotation means (31, 32, 33) simultaneously forms the air supply means for actuators (50, 51, 60, 61) which are installed on the holding device (43).

3. Transport and movement arm according to Claim 1 or 2, characterized in that the piston rod (21) of the second piston/cylinder assembly (20 to 22) is connected to the holding device (43) via an intermediate member (40 to 42), in that the intermediate member (40 to 42) enables the holding device (43) to execute a swinging movement about an axis (42) at rightangles to the axis of the piston rod (21), and in that an actuator is provided for swinging a part (41) of the intermediate member (40 to 42) about the axis (42), said actuator being in the form of a piston/cylinder assembly (50, 51).

4. Transport and movement arm according to any one of the preceding Claims, characterized in that the articles (45) are arranged in a transport basket (46) with a handle (44) which can be slipped into the holding device, said device being configured as a hook (43), and in that a locking mechanism (60 to 62) is provided in order to detain the handle (44) in the hook (43).

5. Transport and movement arm according to Claim 4, characterized in that the locking mechanism (60 to 62) has an actuator in the form of a piston/cylinder assembly (60, 61) which causes a locking yoke (62) to execute a swinging movement, said yoke being fastened to the hook (43).

6. Transport and movement arm according to any one of the preceding Claims, characterized in that a feedback system (70, 71) is provided for establishing whether the holding device (43) is in the loaded condition.

7. Transport and movement arm according to any one of the preceding Claims, characterized in that feedback systems are provided for signalling the positions of the piston/cylinder assemblies (10 to 12, 20 to 22), the position of the intermediate member (40 to 42), and the position of the locking mechanism (60 to 62).

## Revendications

1. Bras de transport et de manœuvre pour des objets devant être soumis à un traitement avec des liquides, comprenant un système de piston-cylindre (10 à 12, 20 à 22) monté sur un dispositif de suspension (100) et dont l'extrémité opposée au dispositif de suspension (100) porte un dispositif de réception (43) pour les objets à traiter (45), et un blocage en rotation (31 à 33) qui empêche une rotation du dispositif de réception (43) par rapport au dispositif de suspension (100), caractérisé en ce que le système de piston-cylindre (10 à 12) comprend deux systèmes de piston-cylindre (10 à 12, 20 à 22) disposés en ligne, l'un derrière l'autre, dont le premier (10 à 12) présente une course maximale relativement faible pour déplacer les objets à traiter (45) dans le liquide, tandis que le second (20 à 22) présente une course maximale relativement grande pour plonger les objets (45) dans le liquide et pour les en sortir; que les cylindres (12, 22) des deux systèmes de piston-cylindre (10 à 12, 20 à 22) sont réalisés sous la forme d'un cylindre (1) unique divisé par une cloisin (1a); et que la tige de piston (11) du premier système de piston-cylindre (10 à 12) est fixée sur le dispositif de suspension (100), alors que la tige de piston (21) du second système de piston-cylindre (20 à 22) est rattachée au dispositif de réception (43) pour les objets (45).

2. Bras de transport et de manœuvre selon la revendication 1, caractérisé en ce que le système de blocage en rotation (31, 32, 33) constitue en même temps l'amenée d'air pour des dispositifs de manœuvre (50, 51, 60, 61) montés sur le dispositif de réception (43).

3. Bras de transport et de manœuvre selon l'une des revendications 1 ou 2, caractérisé en ce que la tige de piston (21) du second système de piston-cylindre (20 à 22) est reliée, par l'intermédiaire d'un élément intermédiaire (40 à 42), au dispositif de réception (43); que l'élément intermédiaire (40 à 42) permet un pivotement du dispositif de réception (43) autour d'un axe (42) perpendiculaire à l'axe de la tige de piston (21); et qu'il est prévu un dispositif de manœuvre sous la forme d'un système de piston-cylindre (50, 51) pour faire pivoter la partie (41) de l'élément intermédiaire (40 à 42) autour de l'axe (42).

4. Bras de transport et de manœuvre selon l'une quelconque des revendications 1 à 3, caractérisé en ce que les objets (45) sont placés dans un panier de transport (46) muni d'une poignée (44) laquelle peut être accrochée dans le dispositif de réception conformé en crochet (43); et qu'il est prévu un dispositif de verrouillage (60 à 62) pour verrouiller la poignée (44) dans le crochet (43).

5. Bras de transport et de manœuvre selon la revendication 4, caractérisé en ce que le dispositif de verrouillage (60 à 62) comprend un dispositif de manœuvre sous la forme d'un système de piston-cylindre (60, 61) qui fait pivoter un étrier de verrouillage (62) fixé sur le crochet (43).

6. Bras de transport et de manœuvre selon l'une quelconque des revendications 2 à 5, caractérisé en ce qu'il comprend un dispositif de réponse (70, 71) pour indiquer l'état de chargement du dispositif de réception (43).

7. Bras de transport et de manœuvre selon l'une quelconque des revendications 1 à 6, caractérisé en ce qu'il comprend des dispositifs de réponse pour indiquer la position des systèmes de piston-cylindre (10 à 12, 20 à 22), de l'élément intermédiaire (40 à 42) et du dispositif de verrouillage (60 à 62).

# FIG.1

# FIG.2

# FIG.3